# NEUE EUROPÄISCHE PATENTSCHRIFT

(11) **EP 1 084 885 B2**
(45) Veröffentlichungstag und Bekanntmachung des Hinweises auf die Entscheidung über den Einspruch: **04.09.2013**
(45) Hinweis auf die Patenterteilung: 02.06.2004
(21) Anmeldenummer: 00119152.7
(22) Anmeldetag: 05.09.2000
(51) Int. Cl.: B60J 7/20, B62D 25/12

(54) **Cabriolet-Fahrzeug**
Convertible vehicle
Véhicule convertible

(30) Priorität: 13.09.1999 DE 29916003 U
(43) Veröffentlichungstag der Anmeldung: 21.03.2001
(73) Patentinhaber: Wilhelm Karmann GmbH, 49084 Osnabrück (DE)
(72) Erfinder: Baumeier, Andreas, 49143 Bissendorf (DE); Tiemeyer, Hartwich, 49080 Osnabrück (DE)
(74) Vertreter: Kronthaler, Wolfgang N.K.

(56) Entgegenhaltungen:
- EP-A- 0 846 584
- EP-A1- 0 857 598
- DE-C- 4 445 944
- DE-C- 19 516 876
- DE-C1- 19 706 444
- DE-C2- 19 516 877
- DE-U1- 8 913 486

## Beschreibung

Die Erfindung bezieht sich auf ein Cabriolet-Fahrzeug mit einem im rückwärtigen Fahrzeugbereich unterhalb eines Deckelteils ablegbaren Dach, wobei das Deckelteil einerseits zur Freigabe einer in seinem vorderen Endbereich benachbarten Durchtrittsöffnung für das Dach und andererseits zur Freigabe einer in seinem hinteren Endbereich benachbarten Aufnahmeöffnung für Gepäck aufund zu beweglich ist, wobei zumindest ein Schloß zur Sicherung des Deckelteils gegen Freigabe der Durchtrittsöffnung für das Dach vorgesehen ist und wobei über zumindest ein die Auf- und Zubewegung des Deckelteils für die Dachaufnahme bewirkendes Antriebsorgan das Schloß ver- oder entriegelbar ist.

Aus der DE 197 56 062 C1 ist ein Cabriolet-Fahrzeug bekannt, das ein unterhalb eines Deckelteils ablegbares Dach aufweist, wobei das Deckelteil in Doppelfunktion gleichzeitig als Begrenzung eines Kofferraumes dient und einerseits zur Freigabe einer Durchtrittsöffnung für das Dach und andererseits zur Freigabe einer Aufnahmeöffnung für Gepäck geöffnet werden kann. Zur Sicherung gegen eine Öffnung des Deckelteils zur Freigabe der Durchtrittsöffnung für das Dach ist ein Schloß erforderlich, das separat angesteuert werden muß und sich im vorderen Teil des Deckelteils befindet. Zudem sind seitliche Hilfsrahmen ausgebildet, die an der Karosserie gelagert sind und angesteuert werden müssen. Damit geht ein erheblicher Steuerungsaufwand einher. Zudem resultiert aus dem Vorsehen solcher Schlösser eine Einschränkung des zur Verfügung stehenden Packraumes.

Aus der gattungsgemäßen DE 195 16 876 C1 ist ein Cabriolet-Fahrzeug der eingangs genannten Art bekannt, bei dem ein Schnappverschluß als Schloß zur Sicherung des Dekkelteils gegen Freigabe der Durchtrittsöffnung für das Dach vorgesehen ist, das über das Antriebsorgan ver- bzw. entriegelbar ist. Dazu hat das Antriebsorgan einen Steuerhub, um das Deckelteil zu entriegeln. Während dieses Steuerhubes wird ein Seilzug, der mit einem Auslösehebel des Schnappverschlußteiles bewegungsfest gekoppelt ist, im Sinne einer Öffnungsbewegung des Auslösehebels des Schnappverschlusses aktiviert. Bei dem Seilzug handelt es sich um einen Bowdenzug, der in einer Führung entlang dem Umfang eines Radgehäuses der Karosserie beweglich geführt ist.

Damit geht ein nicht unerheblicher Steuerungsaufwand einher. Zudem kann es zu Beschädigungen des Seilzuges kommen. Wenn der Seilzug nicht exakt geführt oder z. B. Verschmutzungen innerhalb der Führung entlang des karosserieseitigen Radgehäuses eine positionsgenaue Führung des Seilzuges beeinträchtigen, wird der Öffnungsmechanismus des Deckelteiles erheblich behindert. Das Antriebsorgan greift an dem Deckelteil in Fahrtrichtung in einem rückwärtigen Bereich an, so daß das vordere Schnappverschlußelement im geöffneten Zustand des Deckelteiles für die Aufnahme des Dachteils frei nach außen ragt. Das hat zur Folge, daß aufgrund von Deckelteilbewegungen während des Schließvorgangs das Schloßelement nicht in dem karosserieseitigen Gegenschloßstück exakt zu positionieren ist, was den Schließvorgang beeinträchtigt bzw. sogar gänzlich verhindern kann.

Aus der DE 44 45 944 C1 ist ein Cabriolet-Fahrzeug bekannt, bei dem ebenfalls das Deckelteil in Doppelfunktion gleichzeitig als Begrenzung eines Kofferraumes dient und zur Freigabe einer Durchtrittsöffnung für das Dach und andererseits zur Freigabe einer Aufnahmeöffnung für das Gepäck geöffnet werden kann. Das Deckelteil ist mit seiner Schwenkachse an einem Hilfsrahmen angelenkt und dieser ist seinerseits über eine Schwenkachse karosserieseitig am unteren Fahrzeugendbereich abgestützt. Zur Verschwenkung dieses Hilfsrahmens sind an jeder Fahrzeugseite Antriebsorgane vorgesehen, wobei ein oberes Antriebsorgan für die Freigabe des Gepäckraumes durch Verschwenkung des Deckelteiles verantwortlich ist und für die Freigabe des Deckelteiles zur Aufnahme des Daches das andere, im unteren Karosseriebereich angeordnetes weiteres Antriebsorgan sorgt. Das Vorsehen mehrerer Antriebsorgane erfordert einen erhöhten Bauaufwand. Zur Verriegelung von dort vorgesehenen Schloßelementen sind jeweils wiederum besondere Schloßelemente erforderlich, die in nicht näher dort offenbarter Weise zu entriegeln bzw. zu verriegeln sind, womit wiederum ein besonderer Bauaufwand einhergeht.

Es ist Aufgabe der vorliegenden Erfindung, ein Cabriolet-Fahrzeug der eingangs genannten Art hinsichtlich des Steuerungsaufwandes für die Bewegung des Deckelteiles zu vereinfachen.

Zur Lösung dieser Aufgabe zeichnet sich das Cabriolet-Fahrzeug der eingangs genannten Art durch die im kennzeichnenden Teil des Anspruchs 1 angegebenen Merkmale aus. Hinsichtlich weiterer vorteilhafter Ausgestaltung wird auf die Ansprüche 2 bis 9 verwiesen.

Durch die Ver- und Entriegelung eines Schlosses zur Sicherung des Deckelteils gegen Freigabe der Durchtrittsöffnung für das Dach mittels des Antriebsorgans und des während der gesamten Bewegungen des Deckelteils mit diesem über das Schloß verbundenen Riegels des Antriebsorgans entfällt für die Entriegelungs- und Verschließbewegung des Schlosses eine separate Ansteuerung. Allein mit der Ansteuerung des Antriebsorganes kann die Entriegelung bewirkt werden, ohne das es besonderer zusätzlicher, beweglich geführter Übertragungselemente wie beispielsweise Seilzüge und dgl. bedarf. Allein durch den Riegel, der im vorderen Endbereich des Antriebsorganes vorgesehen ist, erfolgt die Verriegelung, die Entriegelung und aufgrund des Kontaktes auch während der Aufschwenk- und Zuschwenkbewegung des Deckelteiles die unmittelbare Übertragung der Schließ- und Öffnungsbewegung des Antriebsorganes.

Erfindungsgemäß ist das Antriebsorgan für die Auf- und Zubewegung des Deckelteils zur Dachaufnahme als Hydraulikzylinder mit einer Kolbenstange ausgebildet, deren vorderer Endbereich den Riegel aufweist, der in einer schlüssellochförmigen Kulisse geführt ist und in geschlossener Stellung des Deckelteils formschlüssig und verdrehgesichert im Halsbereich der Schlüssellochkulisse gehalten ist. Dabei ist der vordere Endbereich des Hydraulikzylinders durch eine Ausfahrbewegung in den Kopfbereich der Schlüssellochkulisse verfahrbar und in diesem frei drehbar. Der Riegel ist dabei formschlüssig im Halsbereich der Kulisse zu sichern.

Wenn bei Vorhandensein mehrerer Schlösser zur Sicherung des Deckelteils gegen Freigabe der Durchtrittsöffnung für das Dach sämtliche dieser Schlösser über das oder die Antriebsorgan(e) ver- und entriegelbar sind, entfällt hier jeder weitere Steuerungsaufwand für die Schlösser. Separate Riegel, etwa angetrieben durch Elektromotoren o. dgl., sind entbehrlich. Insofern ist auch eine Gewichtseinsparung neben der Raumeinsparung gegeben. Es verbleibt dann lediglich im hinteren Bereich ein Schloß zur Sicherung des Deckelteils gegen eine Freigabe der Aufnahmeöffnung für Gepäck, also ein übliches Kofferraumdeckelschloß, das ohne weiteren Raumbedarf in die vorhandenen Teile integrierbar ist.

Wenn bei Freigabestellung der Durchtrittsöffnung für das Dach das Deckelteil neben der Anbindung über heckseitige Scharnierteile lediglich über Antriebsoder Unterstützungsorgane mit der Karosserie verbunden ist, sind karosserieseitig gelagerte Hilfsrahmen entbehrlich, was eine weitere Vereinfachung, insbesondere eine Verringerung der Drehpunkte, bewirkt. Mit der Verringerung der Anzahl der Drehpunkte geht eine Material- und Gewichtsersparnis einher. Weitere Vorteile und Merkmale ergeben sich aus einem in der Zeichnung dargestellten Ausführungsbeispiel des Gegenstandes der Erfindung.

In der Zeichnung zeigt:
- Fig. 1: eine schematisierte Seitenansicht des Heckbereiches eines erfindungsgemäßen Cabriolet-Fahrzeuges,
- Fig. 2: das Detail II in Fig. 1,
- Fig. 3: eine ähnliche Ansicht wie Fig. 2 bei zur Freigabe der Durchtrittsöffnung für das Dach aufgeschwenktem Deckelteil,

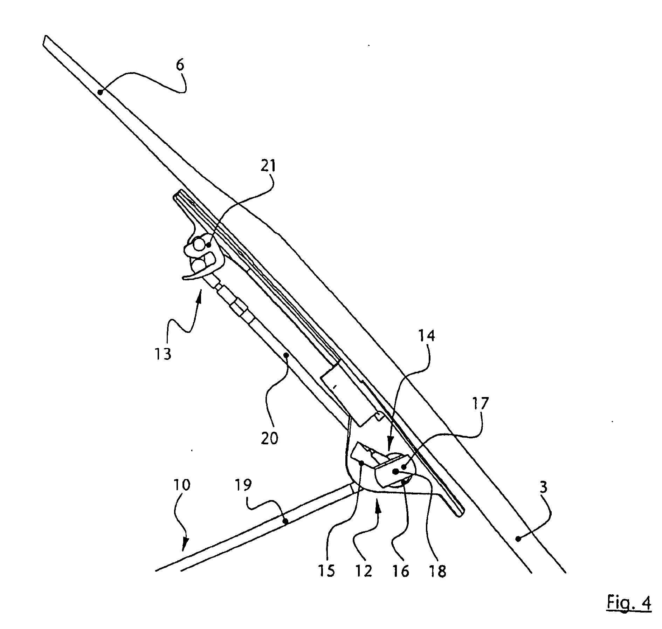

- Fig. 4: die Detailansicht IV in Fig. 3,
- Fig. 5: eine ähnliche Ansicht wie Fig. 2 des zur Freigabe der Aufnahmeöffnung für Gepäck aufgeschwenkten Deckelteils,
- Fig. 6: das geschlossene Deckelteil in Ansicht von einer vertikalen Fahrzeuglängsmittelebene her,

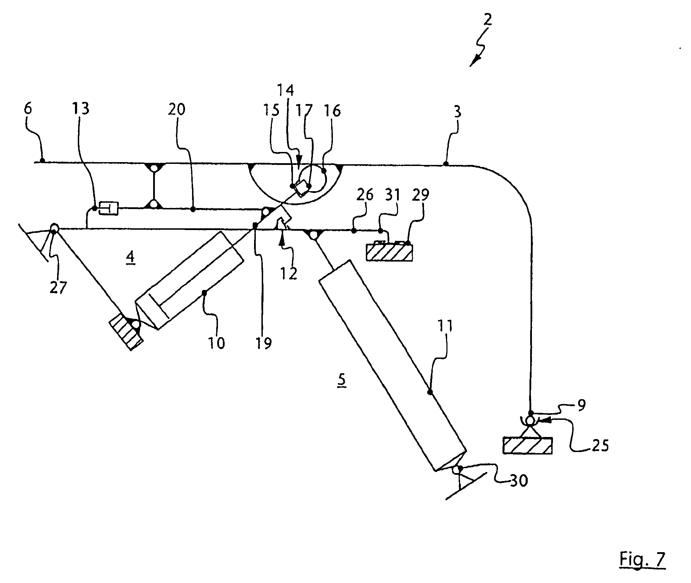

- Fig. 7: eine Funktionsskizze der Teile in Ansicht nach Fig. 2,

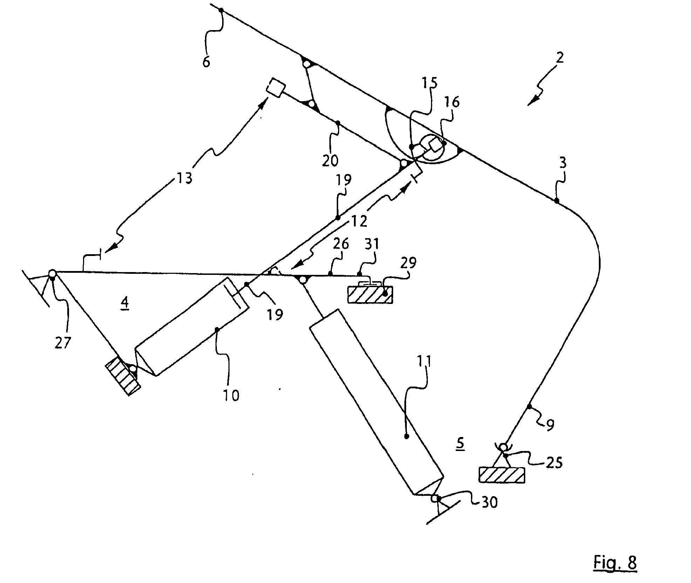

- Fig. 8: eine Funktionsskizze der Teile in Ansicht nach Fig. 3,

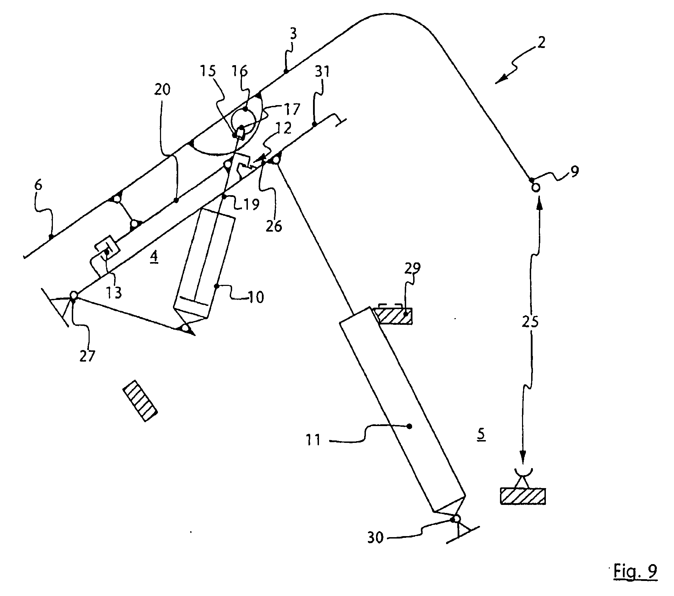

- Fig. 9: eine Funktionsskizze der Teile in Ansicht nach Fig. 5,
- Fig. 10: die als heckseitiges Schloß des Deckelteils ausgebildete Scharniervorrichtung in Seitenansicht,
- Fig. 11: das Scharnierschloß nach Fig. 10 in perspektivischer Einzelteilansicht.

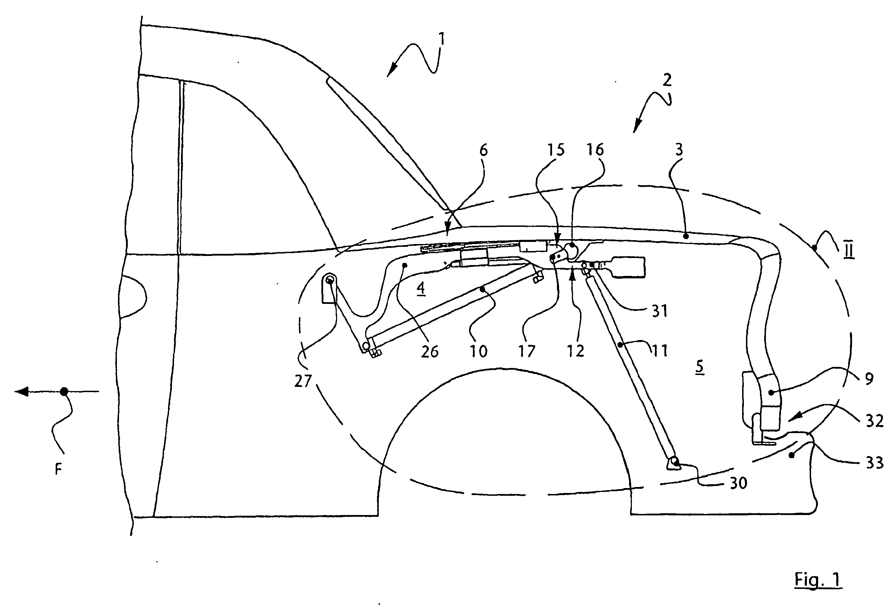

Das Cabriolet-Fahrzeug 1, dessen Heckbereich 2 in der Zeichnung dargestellt ist, weist ein Deckelteil 3 auf, das einen Aufnahmeraum 4 für ein einfahrbares Dach sowie einen Gepäckraum 5 in geschlossener Stellung (Fig. 1, Fig. 2, Fig. 6) überdeckt.

Das Deckelteil 3 ist einerseits derart gegen die Fahrtrichtung F aufschwenkbar, daß es mit dieser einen spitzen Winkel α einschließt und dabei eine seinem vorderen Endbereich 6 benachbarte Durchtrittsöffnung 7 für das Dach freigibt, und andererseits derart, daß es mit der Fahrtrichtung F einen stumpfen Winkel β einschließt und eine Aufnahmeöffnung 8 für Gepäck freigibt, die seinem hinteren Endbereich 9 benachbart ist.

Im Ausführungsbeispiel sind zwei symmetrisch zur einer vertikalen Fahrzeuglängsmittelebene angeordnete Antriebsorgane 10, die hier als Hydraulikzylinder ausgebildet sind, zur Auf- und Zubewegung des Deckelteils 3 für die Dachaufnahme vorgesehen. Auch andere Antriebsorgane, etwa über Elektromotore getriebene, kommen in Betracht. Die Anordnung ist je nach Platzverhältnissen im Fahrzeug vorzunehmen. Neben den Antriebsorganen 10 für die Auf- und Zubewegung des Deckelteils 3 zur Freigabe und zum Verschließen der Durchtrittsöffnung 7 für das Dach sind als weitere Antriebsorgane zwei seitliche Gasdruckzylinder 11 vorgesehen, die eine unterstützende Funktion beim Aufbewegen des Deckelteils 3 zur Freigabe der Aufnahmeöffnung 8 für die Beschickung des Kofferraums 5 mit Gepäck ausüben. Um die Aufnahmeöffnung 8 zu verschließen, muß gegen die Gasdruckzylinder 11 angearbeitet werden. Es ist auch möglich, daß statt dieser eine weitere hydraulische Antriebseinheit vorgesehen ist, die sowohl bei Aufbewegung als auch bei Zubewegung des Deckelteils 3 bezüglich der Aufnahmeöffnung 8 eine unterstützende oder allein antreibende Funktion hat. Hierzu ist dann ein Steuerungselement, vorzugsweise im Heckbereich des Fahrzeugs vorgesehen, mit dem die Zubewegung des Deckelteils 3 ausgelöst werden kann. Durch die Anordnung des Steuerelements im Heckbereich kann der Bediener sicherstellen, daß durch das automatisierte Zuziehen des Deckelteils 3 keine umstehenden Personen gefährdet werden.

Um das Deckelteil 3 in seiner die Durchtrittsöffnung 7 für das Dach verschließenden Stellung zu halten, sind im Ausführungsbeispiel zwei Schlösser 12 und 13 vorgesehen. Das Schloß 12 ist durch eine Schlüssellochkulisse 14 gebildet, die einen parallelwandigen Halsbereich 15 und einen eine runde Umrißgestalt aufweisenden Kopfbereich 16 umfaßt und in der ein als parallelwandiger Riegel ausgebildeter Endbereich 17 der Kolbenstange 19 führbar ist. Die Breite des Riegels 17 entspricht der Breite des Halsbereichs 15, die Länge des Riegels 17 entspricht dem Durchmesser des Kopfbereichs 16. Der Riegel 17 ist an seinem Mittelpunkt 18 mit der ausfahrbaren Kolbenstange 19 des Antriebsorgans 10 verbunden. Die Verbindung zwischen dem Riegel 17 und der Kolbenstange 10 ist drehfest.

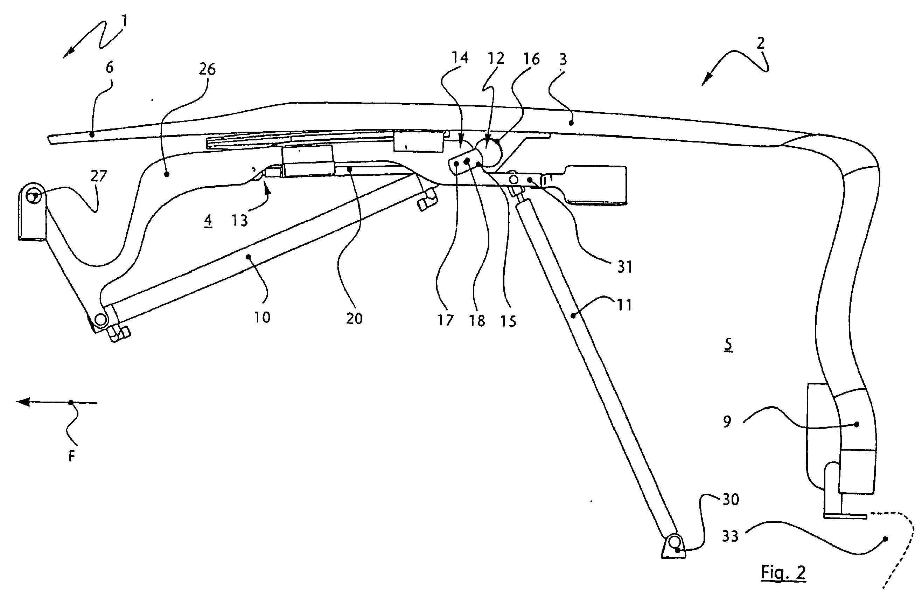

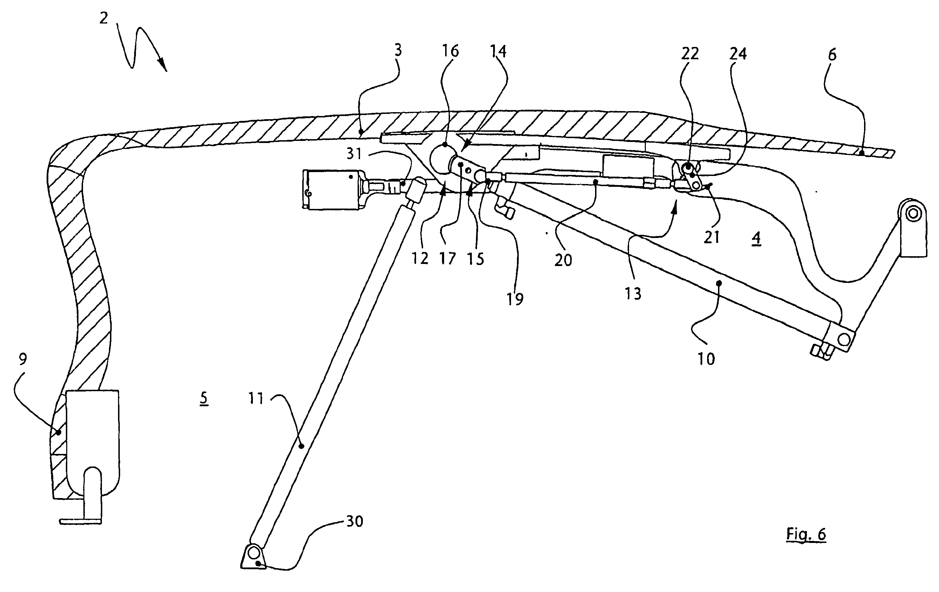

In geschlossener Stellung des Deckelteils (Fig. 2) ist der Riegel 17 im Halsbereich 15 der Schlüssellochkulisse 14 formschlüssig gehalten. Der Halsbereich 15 erstreckt sich dabei in Verlängerung der Achse des Antriebsorgans 10. Die Schlüssellochkulisse 14 ist insgesamt gegenüber dem Deckelteil 3 ortsfest. Durch Ausfahren der Kolbenstange 19 des Antriebsorgans 10 tritt der Riegel 17 in den Kopfbereich 16 der Schlüssellochkulisse 14 ein, in der er nun frei drehbar ist. Der Riegel 17 ist ferner mit einem Zug- und Schubgestänge 20 verbunden, das zu einem weiteren Schloßelement 13 führt. Dieses Schloßelement 13 umfaßt einen Fanghaken 21, der in geschlossener Stellung des Daches (Fig. 1, Fig. 6) einen Riegel, der der Fahrzeugkarosserie zugeordnet ist, umgreift. Durch Betätigung des Antriebsorgans 10 im Sinne einer Aufbewegung des Deckelteils 3, bei der zunächst der Riegel 17 aus dem Halsbereich 15 der Schlüssellochkulisse 14 in deren Kopfbereich 16 eintritt, wird eine Zugkraft auf das Gestängeteil 20 ausgeübt, so daß es den Fanghaken 21 im Sinne eines Aufschwenkens und Freigebens der Verriegelung mit Kraft beaufschlagt. Der Fanghaken 21 ist hierfür um eine Schwenkachse 22 beweglich. Das Zugund Schubgestänge 20 greift an einem mit dieser verbundenen Hebel 24 an. Die beiden Schlösser 12 und 13 zur Verriegelung des Deckelteils 3 sind daher allein durch eine Ausschub- oder Einzugbewegung der Hydraulikzylinder 10 zu betätigen. Eine weitere Steuerung von Schloßteilen, wie sie ansonsten zur Sicherstellung des ordnungsgemäßen Öffnungs- oder Schließablaufs notwendig ist, ist entbehrlich. Dadurch entfallen sowohl die Elektronik zum Ansteuern dieser Schlösser als auch die Antriebselemente, die beispielsweise Bolzen einschieben oder aus einer Verriegelung herausziehen. Insgesamt ist damit eine erhebliche Gewichtsersparnis und eine Montageerleichterung gegeben.

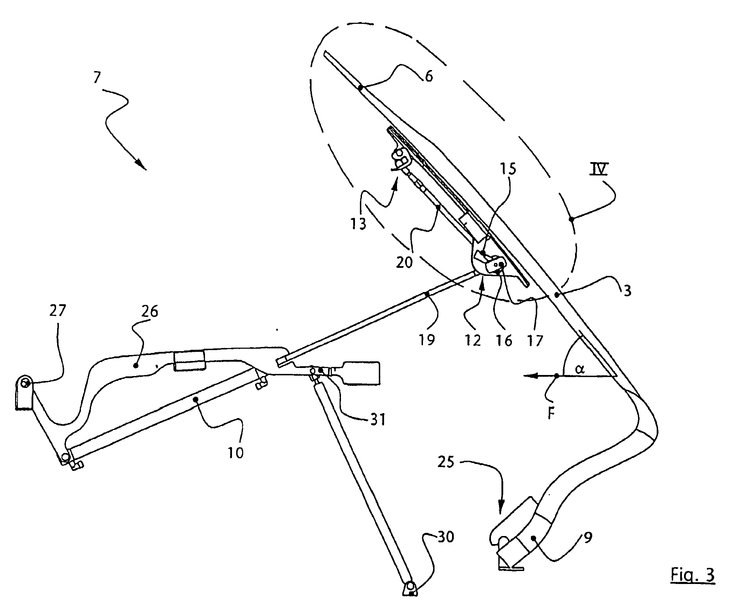

Zur Freigabe der Durchtrittsöffnung 7 für das Dach (Fig. 3) wird eine weitergehende Schubkraft auf den Hydraulikzylinder 10 durch Beaufschlagung mit Hydraulikmittel ausgeübt, wodurch die Kolbenstange 19 weiter ausfährt und über Kraftschluß zwischen dem Riegel 17 und dem Kopfbereich 16 der Schloßkulisse 14 eine Aufschwenkbewegung des Deckelteils 3 bewirkt. Dabei wird der Riegel 17, dessen Ausrichtung gegenüber der Kolbenstange 19 konstant bleibt, in dem Kopfbereich 16 der Schlüssellochkulisse 14 verdreht. Bei Freigabe der Durchtrittsöffnung 7 für das Dach ist das Deckelteil 3 lediglich in seinem rückwärtigen Endbereich 9 an einer Scharniervorrichtung 25 sowie im übrigen nur über die Antriebsorgane 10 mit der Fahrzeugkarosserie verbunden. Weitere Hilfsrahmen oder dergleichen sind entbehrlich, was zu einer zusätzlichen Gewichtsersparnis führt. Es bedarf lediglich einer Drehachse im Scharnier 25, weitere Drehachsen, etwa für Hilfsrahmen oder dergleichen, die eine weitere Lagerung erfordern würden, sind entbehrlich. Die Einsparung von Drehpunkten bewirkt eine weitere Material- und Kostenersparnis.

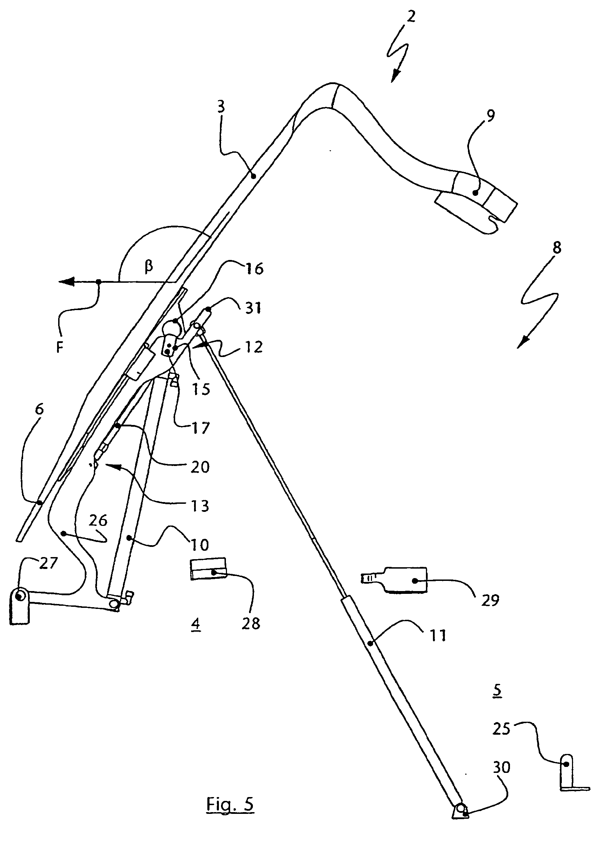

Zur Freigabe der Aufnahmeöffnung 8 für Gepäck (Fig. 5) sind seitliche Gasdruckzylinder 11 vorgesehen, die eine unterstützende Funktion ausüben. Bei Freigabe der Aufnahmeöffnung 8 ist das Deckelteil 3 lediglich in seinem vorderen Endbereich 6 an einem karosserieseitig gelagerten Schwenkarm 26 gehalten und mit der Karosserie über das Lager 27 verbunden. Die Gelenkanordnung 26,27 kann auch als Mehrgelenk ausgebildet sein, wenn gleichzeitig mit dem Aufschwenken auch eine Hubbewegung verbunden sein soll, etwa um das Deckelteil 3 während des Öffnens von der Heckscheibe wegzubewegen.

Im Ausführungsbeispiel wird der Schwenkarm 26 zur Freigabe der Aufnahmeöffnung 8 von seitlichen Halterungen 28 und 29 abgehoben, auf denen er in geschlossener Stellung (Fig. 1, Fig. 6) aufliegt. Eine dieser Halterungen 28,29 kann dabei als Schloßelement ausgebildet sein, so daß die die Aufnahmeöffnung 8 verschließende Stellung gesichert ist. Ein Schloß im Scharnier 25 kann hierfür ausreichend sein.

Die Gasdruckzylinder 11 erstrecken sich zwischen einer karosserieseitigen Anlenkung 30 und einem der Schwenkachse 27 des Schwenkarms 26 abgewandten Bereich 31. Bei Öffnen des Deckelteils 3 gemäß Fig. 5 bewirken die Gasdruckzylinder 11 damit ein Mitverschwenken der Schwenkarme 26, die bei gegensinnigem Verschwenken des Deckelteils 3 (Fig. 3) in Ruhestellung verbleiben.

Das Deckelteil 3 kann insgesamt aus Kunststoff oder üblichen metallischen Karosseriematerialien hergestellt sein. Eine besonders leichte und stabile Version ergibt sich bei Verwendung eines aufgeschäumten metallischen Werkstoffes, insbesondere eines Aluminiumschaumwerkstoffes.

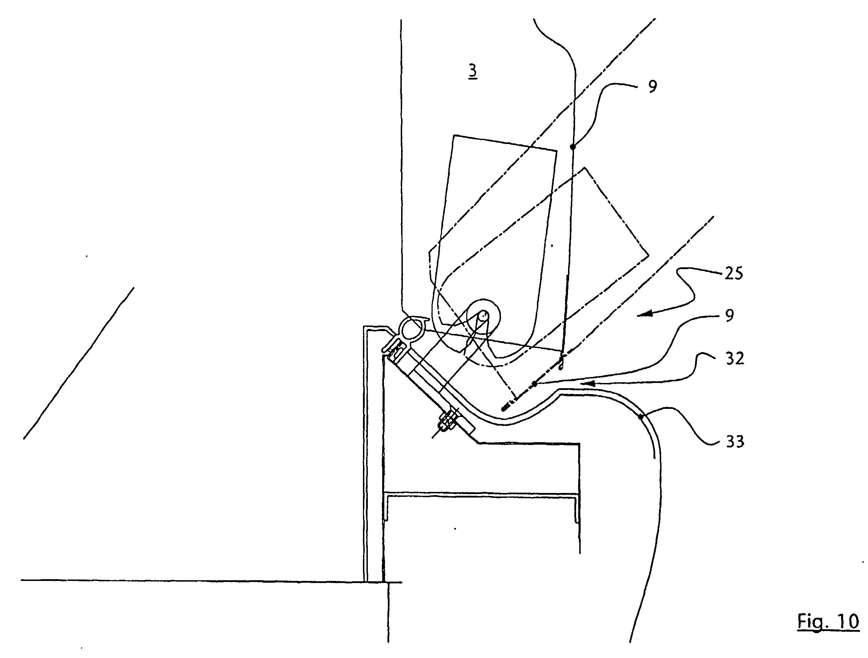

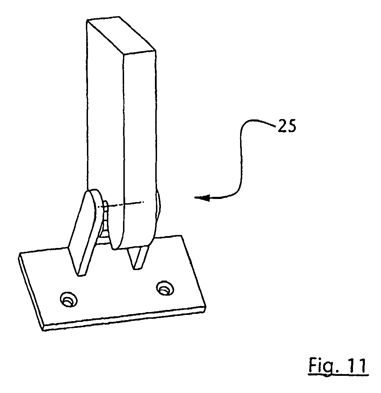

Wie in den Fig. 10 und 11 zu erkennen ist, ist die Scharniervorrichtung 25, die gleichzeitig als heckseitiges Schloß des Deckelteils 3 dient, derart ausgebildet, daß der rückwärtige Endbereich 9 des Deckelteils 3 bis weit nach unten einschwenken kann, so daß die Fuge 32 zwischen dem heckseitigen Bereich 9 und einer Stoßstange 33 sehr schmal und damit optisch wenig störend ausgebildet sein kann.

## Patentansprüche

1. Cabriolet-Fahrzeug (1) mit einem im rückwärtigen Fahrzeugbereich (2) unterhalb eines Deckelteils (3) ablegbaren Dach, wobei das Deckelteil (3) einerseits zur Freigabe einer seinem vorderen Endbereich (6) benachbarten Durchtrittsöffnung (7) für das Dach und andererseits zur Freigabe einer seinem hinteren Endbereich (9) benachbarten Aufnahmeöffnung (8) für Gepäck auf- und zubeweglich ist, wobei zumindest ein Schloss (12; 13) zur Sicherung des Deckelteiles (3) gegen Freigabe der Durchtrittsöffnung (7) für das Dach vorgesehen ist und über zumindest ein die Auf- und Zubewegung des Deckelteils (3) für die Dachaufnahme bewirkendes Antriebsorgan (10) ein Schloss (12; 13) ver- oder entriegelbar ist,
**dadurch gekennzeichnet,**
**dass** das Antriebsorgan (10), welches die Auf- und Zubewegung des Deckelteils (3) für die Dachaufnahme bewirkt als Hydraulikzylinder mit einer Kolbenstange (19) ausgebindet ist, deren vorderer Endbereich einen parallelwendigen Riegel (19) aufweist, welcher in der geschlossenen Stellung, in der geöffneten Stellung und während der Aufschwenk- und Zuschwenkbewegung des Deckeiteils (3) in eine schlüssellochförmige Kulisse (14) des Schlosses darin geführt eingreift, und das Schloss über eine Ausschub- oder eine Einzugbewegung des Antriebsorganes (10) entriegelbar oder verriegelbar ist, indem der mit der Kolbenstange (19) verdreh faste Riegel (17) in geschlossener Stellung des Deckelteils (3) formschlüssig und verdrehgesichert in einem parallelwendigen Halsbereich (15) der Schlüssellochkulisse (14) gehalten ist und zur Entriegelung durch eine Ausfahrbewegung des Hydraulikzylinders in den Kopfbereich (16) der Schlüssellochkulisse (14) verfahrbar und in diesem frei drehbar ist.

2. Cabriolet-Fahrzeug nach Anspruch 1, **dadurch gekennzeichnet, daß** der vordere Endbereich der Kolbenstange (19) mit einem Gestängeteil (20) verbunden ist, an dessen abgewandtem Ende ein weiteres Schloßelement (13) vorgesehen ist.

3. Cabriolet-Fahrzeug nach Anspruch 2, **dadurch gekennzeichnet, daß** das weitere Schloßelement einen Fanghaken (21) umfaßt und durch Übergang des vorderen Endbereichs der Kolbenstange (19) zwischen dem Hals (15) und dem Kopfbereich (16) der Schlüssellochkulisse (14) in oder außer Verriegelungsstellung überführbar ist.

4. Cabriolet-Fahrzeug nach einem der Ansprüche 1 bis 3, **dadurch gekennzeichnet, daß** bei Freigabe der Durchtrittsöffnung (7) für das Dach das Deckelteil (3) in seinem rückwärtigen Endbereich (9) an Scharniervorrichtungen (25) gehalten ist und eine Verbindung des Deckelteils (3) zur Karosserie über zumindest ein, die Auf- oder Zubewegung des Deckelteils (3) für die Dachaufnahme bewirkendes Antriebsorgan (10) besteht.

5. Cabriolet-Fahrzeug nach einem der Ansprüche 1 bis 4, **dadurch gekennzeichnet, daß** bei Freigabe der Aufnahmeöffnung (8) für Gepäck das Deckelteil (3) in seinem vorderen Endbereich (6) an einer Gelenkanordnung (26; 27) gehalten ist und eine Verbindung des Deckelteils (3) zur Karosserie über zumindest ein die Auf- oder Zubewegung des Deckelteils (3) für die Gepäckaufnahme bewirkendes Antriebsorgan (11) besteht.

6. Cabriolet-Fahrzeug nach einem der Ansprüche 1 bis 5, **dadurch gekennzeichnet, daß** für die Auf- oder Zubewegung des Deckelteils (3) zumindest ein hydraulisches Organ (10) vorgesehen ist und für die Aufbewegung des Deckelteils (3) für die Gepäckaufnahme zumindest ein Gasdruckzylinder (11) vorgesehen ist.

7. Cabriolet-Fahrzeug nach einem der Ansprüche 1 bis 6, **dadurch gekennzeichnet, daß** das Antriebsorgan (10) beidseits an einem Schwenkarm (26) gelagert ist, der bei Freigabe der Aufnahmeöffnung für Gepäck mit dem Deckelteil (3) verschwenkt wird und bei Freigabe der Durchtrittsöffnung (7) für das Dach in Ruhestellung verbleibt.

8. Cabriolet-Fahrzeug nach Anspruch 7, **dadurch gekennzeichnet, daß** zur Freigabe der Durchtrittsöffnung (7) für das Dach die Kolbenstange (19) von dem Schwenkarm (26) heckwärts und aufwärts verfahrbar ist.

9. Cabriolet-Fahrzeug nach Anspruch 7 oder 8, **dadurch gekennzeichnet, daß** am hinteren, der Schwenkachse (27) abgewandten Bereich des Schwenkarms (26) als Antriebsorgan ein Gasdruckzylinder (11) angreift, über den bei Freigabe der Aufnahmeöffnung (8) für Gepäck der Schwenkarm (26) verschwenkbar ist.

## Claims

1. Convertible vehicle (1), having a roof able to be stowed in the rear part (2) of the vehicle underneath a cover member (3), the cover member (3) being movable to open and close on the one hand to uncover an opening (7) adjacent its front end-region (6) for the roof to pass through and on the other hand to uncover a receiving opening (8) for luggage adjacent its rear end-region (9), at least one lock (12; 13) being provided for securing the cover member (3) against uncovering the opening (7) for the roof to pass through, and a lock (12; 13) being lockable and unlockable by means of at least one actuating member (10) which produces the opening and closing movement of the cover member (3) for the reception of the roof, **characterised in that** the actuating member (10) which produces the opening and closing movement of the cover member (13) for the reception of the roof is a hydraulic cylinder having a piston rod (19) and has, at its front end-region (6), a parallel-walled lock-bolt (17) which engages in a keyhole-shaped gate (14) of the lock and is guided therein when the cover member (3) is in its closed position and its open position and during its pivoting opening and closing movement, and **in that** the lock can be unlocked or locked by means of the lock-bolt (17) a push-out or pull-in movement of the actuating member (10), wherein the lock-bolt (17) which is rotational fixed to the piston rod (19), when the cover member (3) is in the closed position, is held by positive interengagement and in such a way as to be secured against rotation in the parallel-walled neck region (15) of the keyhole gate (14), and is by an extension movement of the hydraulic cylinder (10) movable into the head region (16) of the keyhole gate (15) and is freely rotatable therein.

2. Convertible vehicle according to claim 1, **characterised in that** the front end-region of the piston rod (19) is connected to a linkage member (20), at the remote end of which is provided a further lock element (13).

3. Convertible vehicle according to claim 2, **characterised in that** the further lock element comprises a hooked catch (21) and can be transferred into or out of a locking position as a result of the transition of the front end-region of the piston rod (19) between the neck (15) and the head region (16) of the keyhole gate (14).

4. Convertible vehicle according to one of claims 1 to 3, **characterised in that**, in uncovering the opening (7) for the roof to pass through, the cover member (3) is held on hinge devices (25) in its rear end-region (9) and there is a connection for the cover member (3) to the bodywork via at least one actuating member (10) which produces or assists the opening or closing movement of the cover member (3) for the reception of the roof.

5. Convertible vehicle according to one of claims 1 to 4, **characterised in that**, in uncovering the receiving opening (8) for luggage, the cover member (3) is held on a joint arrangement (26; 27) in its front end-region (6) and there is a connection for the cover member (3) to the bodywork via at least one actuating member (11) which produces or assists the opening or closing movement of the cover member (3) for the reception of luggage.

6. Convertible vehicle according to one of claims 1 to 5, **characterised in that** at least one hydraulic member (10) is provided for the opening and closing movement of the cover member (3) and at least one compressed gas cylinder (11) is provided for the opening movement of the cover member (3) for the reception of luggage.

7. Convertible vehicle according to one of claims 1 to 6, **characterised in that** the actuating member (10) is mounted at both ends on a pivoting arm (26) which is pivoted with the cover member (3) when the receiving opening for luggage is uncovered and which remains in a rest position when the opening (7) for the roof to pass through is uncovered.

8. Convertible vehicle according to claim 7, **characterised in that** the piston rod (19) can be moved rearwards and upwards by the pivot arm (26) to cause the opening (7) for the roof to pass through to be uncovered.

9. Convertible vehicle according to claim 7 or 8, **characterised in that** a compressed gas cylinder (11), by which the pivoting arm (26) can be pivoted when the receiving opening (8) for luggage is being uncovered, engages as an actuating member with the rear region of the pivoting arm (26) remote from the pivot shaft (27).

## Revendications

1. Véhicule cabriolet (1) comprenant un pavillon qui peut être escamoté dans la partie arrière (2) du véhicule au-dessous d'une partie de capot (3), la partie de capot (3) étant mobile dans le sens de l'ouverture ou de la fermeture, d'une part pour dégager une ouverture de passage (7) pour le pavillon, qui est adjacente à sa région terminale avant (6) et, d'autre part, pour dégager une ouverture de réception (8) pour les bagages, qui est adjacente à sa région terminale arrière (9), dans lequel au moins une serrure (12, 13) est prévue pour bloquer la partie de capot (3) et pour l'empêcher de dégager l'ouverture de passage (7) pour le pavillon, et dont une serrure (12 ; 13) peut être verrouillée et déverrouillée par l'intermédiaire d'au moins un organe d'entraînement (10) qui détermine le mouvement d'ouverture et de fermeture de la partie de capot (3) pour la réception du pavillon,
**caractérisé en ce que**
l'organe d'entraînement (10), qui effectue le mouvement d'ouverture et de fermeture de la partie de capot (3) pour le logement du pavillon, est réalisé sous forme d'un cylindre hydraulique comprenant une tige de piston (19), dont la région terminale avant comprend un verrou (19) à parois parallèles qui s'engage dans une coulisse (14) en forme de trou de serrure, dans laquelle il est guidé, aussi bien dans la position fermée que dans la position ouverte et pendant le pivotement d'ouverture et de fermeture de la partie de capot (3), et la serrure peut être déverrouillée ou verrouillée par un mouvement d'extraction ou d'insertion de l'organe d'entraînement (10) en retenant le verrou (17), qui est bloqué en rotation ensemble avec la tige de piston (19), dans la position fermée de la partie de capot (3) par liaison de forme et avec blocage en rotation dans une région de col (15), à parois parallèles, de la coulisse en trou de serrure (14) et ledit verrou (17) pouvant se déplacer dans la région de tête (16) de la coulisse en trou de serrure (14) sous l'effet d'un un mouvement d'extraction du cylindre hydraulique et pouvant tourner librement dans cette région.

2. Véhicule cabriolet selon la revendication 1, **caractérisé en ce que** la region terminale avant de la tige de piston (19) est reliée à une partie de tringlerie (20) à l'extrémité éloignée de laquelle est prévu un autre élément de serrure (13).

3. Véhicule cabriolet selon la revendication 2, **caractérisé en ce que** l'autre élément de serrure comprend un crochet d'arrêt (21) et il peut être placé en position de verrouillage ou hors de cette position sous l'effet du passage de la région terminale avant de la tige de piston (19) entre le col (15) et la région de tête (16) de la coulisse en trou de serrure (14).

4. Véhicule cabriolet selon une des revendications 1 à 3, **caractérisé en ce que** lors du dégagement de l'ouverture de passage (7) pour le pavillon, la partie de capot (3) est tenue dans sa région terminale arrière (9) au droit de dispositifs à charnière (25), et une liaison existe entre la partie de capot (3) et la carrosserie par l'intermédiaire d'au moins un organe d'entraînement (10) qui détermine ou assiste le mouvement d'ouverture et de fermeture de la partie de capot (3) pour la réception du pavillon.

5. Véhicule cabriolet selon une des revendications 1 à 4, **caractérisé en ce que** lors du dégagement de l'ouverture de réception (8) pour les bagages, la partie de capot (3) est tenue dans sa région terminale avant (6) au niveau d'un dispositif d'articulation (26 ; 27), et une liaison existe entre la partie de capot (3) et la carrosserie par l'intermédiaire d'au moins un organe d'entraînement (11) qui détermine ou assiste le mouvement d'ouverture ou de fermeture de la partie de capot (3) prévue pour la réception des bagages.

6. Véhicule cabriolet selon une des revendications 1 à 5, **caractérisé en ce qu'** au moins un organe hydraulique (1 0) est prévu pour le mouvement d'ouverture ou de fermeture de la partie de capot (3), et au moins un cylindre à pression de gaz (11) est prévu pour le mouvement d'ouverture de la partie de capot (3) pour la réception des bagages.

7. Véhicule cabriolet selon une des revendications 1 à 6, **caractérisé en ce que** l'organe d'entraînement (10) est articulé des deux côtés sur un bras pivotant (26) qui pivote avec la partie de capot (3) lors du dégagement de l'ouverture de réception pour les bagages et qui reste en position de repos pour le dégagement de l'ouverture de passage (7) pour le pavillon.

8. Véhicule cabriolet selon la revendication 7, **caractérise en ce que** la tige de piston (19) peut être déplacée vers l'arrière et vers le haut par le bras oscillant (26) pour dégager l'ouverture de passage (7) pour le pavillon.

9. Véhicule cabriolet selon la revendication 7 ou 8, **caractérisé en ce que** l'organe d'entraînement est un cylindre a pression de gaz (11) qui attaque la région arrière, éloignée de l'axe d'oscillation (27), du bras oscillant (26) et par l'intermédiaire duquel bras oscillant (26) peut être basculé lors du dégagement de l'ouverture de réception (8) pour les bagages.
